# EUROPÄISCHE PATENTANMELDUNG

(11) **EP 1 745 843 A1**
(43) Veröffentlichungstag der Anmeldung: **24.01.2007**
(21) Anmeldenummer: 06011334.7
(22) Anmeldetag: 01.06.2006
(51) Int. Cl.: B01J 8/02, B01J 4/00, C01B 3/38, B01F 5/06

(54) **Reformer zur Erzeugung von Synthesegas**

(30) Priorität: 22.07.2005 DE 102005034941
(71) Anmelder: J. Eberspächer GmbH & Co. KG, 73730 Esslingen (DE)
(72) Erfinder: Eberspach, Günter, 72649 Wolfschlugen (DE)

(57) **Zusammenfassung**

Die Erfindung betrifft einen Reformer (1) zum Erzeugen eines wasserstoffhaltigen Synthesegases (15) aus einem Brennstoff (6) und aus einem Oxidator (9), insbesondere für eine Brennstoffzellenanlage (16), umfassend eine Brennstoffzuführeinrichtung (2) zum Zuführen eines gasförmigen Brennstoffs (6), eine Oxidatorzuführeinrichtung (3) zum Zuführen eines gasförmigen Oxidators (9), einen Reaktor (4) zum Erzeugen des Synthesegases (15) aus dem Brennstoff (6) und aus dem Oxidator (9).

Um die Funktion des Reaktors (4) zu verbessern, ist stromauf des Reaktors (4) eine Mischeinrichtung (5) angeordnet, die einen von Gasen durchströmbaren Körper (10) aufweist, der zwischen einer im Betrieb des Reformers (1) mit dem Brennstoffgas (6) und mit dem Oxidatorgas (9) beaufschlagten Einströmseite (11) und einer Ausströmseite (12), aus der im Betrieb des Reformers (1) ein aus Brennstoffgas (6) und Oxidatorgas (9) gebildetes Gasgemisch (14) ausströmt, wenigstens eine im Strömungsweg angeordnete, für Gase durchlässige, poröse Wandung (13) aufweist.

## Beschreibung

Die vorliegende Erfindung betrifft einen Reformer zum Erzeugen eines wasserstoffhaltigen Synthesegases aus einem Brennstoff und aus einem Oxidator, insbesondere für eine Brennstoffzellenanlage. Die Erfindung betrifft außerdem eine neuartige Verwendung eines von Gasen durchströmbaren Körpers.

Moderne Kraftfahrzeuge können zur Deckung ihres Stromverbrauchs mit einer motorunabhängig arbeitenden Stromerzeugereinrichtung ausgestattet sein, die mit einer Brennstoffzelle betrieben wird. Hierbei wird mit Hilfe eines Reformers aus dem jeweils zur Verfügung stehenden Kraftstoff, wie z. B. Benzin oder Diesel oder Methangas, ein wasserstoffhaltiges Brennstoffgas oder Synthesegas als Reformat hergestellt. Dieses Synthesegas kann dann in einer Brennstoffzelle zusammen mit einem gasförmigen sauerstoffhaltigen Oxidator, in der Regel Luft, zur Erzeugung von Strom genutzt werden. Zur Erzeugung des Synthesegases arbeitet der Reformer mit einem Reaktor, der in der Regel durch einen Katalysator gebildet ist, der so ausgestaltet ist, dass er bei einem stark unterstöchiometrischen Betrieb (Brennstoffüberschuss) den Brennstoff nur partiell oxidiert, wodurch unter anderem molekularer Wasserstoff entsteht.

Für eine ordnungsgemäße und effektive Funktion des Reaktors ist dabei entscheidend, dass das zugeführte Brennstoff-Oxidator-Gasgemisch möglichst homogen ist.

Hier setzt die vorliegende Erfindung an. Die Erfindung beschäftigt sich mit dem Problem, für einen Reformer der eingangs genannten Art eine verbesserte Ausführungsform anzugeben, die sich insbesondere durch eine homogene Gasgemischzuführung zum Reaktor auszeichnet. Darüber hinaus beschäftigt sich die Erfindung allgemein mit dem Problem, für die Durchmischung von wenigstens zwei Gasen einen vorteilhaften Weg aufzuzeigen.

Diese Probleme werden durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einen von Gasen durchströmbaren Körper, der zwischen einer Einströmseite und einer Ausströmseite zumindest eine im Strömungsweg angeordnete, für Gase durchlässige, poröse Wandung aufweist, zum Vermischen der Brennstoffgasströmung mit der Oxidatorgasströmung zu verwenden. Hierzu wird besagter Körper stromauf des Reaktors angeordnet und dient dort als Mischeinrichtung. Es hat sich gezeigt, dass inhomogene Gasströmungen bei der Durchströmung derartiger poröser Wandungen intensiv homogenisiert werden.

Grundsätzlich kann besagter Körper denselben Aufbau aufweisen wie ein an sich bekanntes keramisches Partikelfilter mit wechselseitig verschlossenen Einlasskanälen und Auslasskanälen, die über gemeinsame, gasdurchlässige, poröse Wandungen voneinander getrennt sind. Somit nutzt und verallgemeinert die vorliegende Erfindung den Gedanken, ein Partikelfilter zur Homogenisierung einer Gasströmung zu verwenden.

Neben der Homogenisierung des dem Reaktor zugeführten Gasgemischs bietet der stromauf des Reaktors angeordnete Körper zusätzlich den Vorteil, dass Partikel, in der Regel Ruß, die bei bestimmten Betriebszuständen des Reformers, stromauf des Reaktors entstehen können, durch den Körper aus der Gasströmung heraus gefiltert werden können. Die porösen Wandungen halten die mitgeführten Partikel zurück. Der Körper der Mischeinrichtung arbeitet dann zusätzlich als Partikelfilter. Hierdurch kann der Reaktor vor einer schädlichen Verschmutzung geschützt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung im Längsschnitt eines Reformers,
- Fig. 2: einen stark vereinfachten Längsschnitt durch einen Körper einer Mischeinrichtung,
- Fig. 3: eine Ansicht wie in Fig. 2, jedoch bei einer anderen Ausführungsform,
- Fig. 4: einen Querschnitt durch einen Teilbereich des Körpers,
- Fig. 5: ein Querschnitt wie in Fig. 4, jedoch bei einer anderen Ausführungsform,
- Fig. 6: einen vereinfachten Längsschnitt durch den Körper bei einer weiteren Ausführungsform,
- Fig. 7: eine Ansicht wie in Fig. 6, jedoch bei einer anderen Ausführungsform.

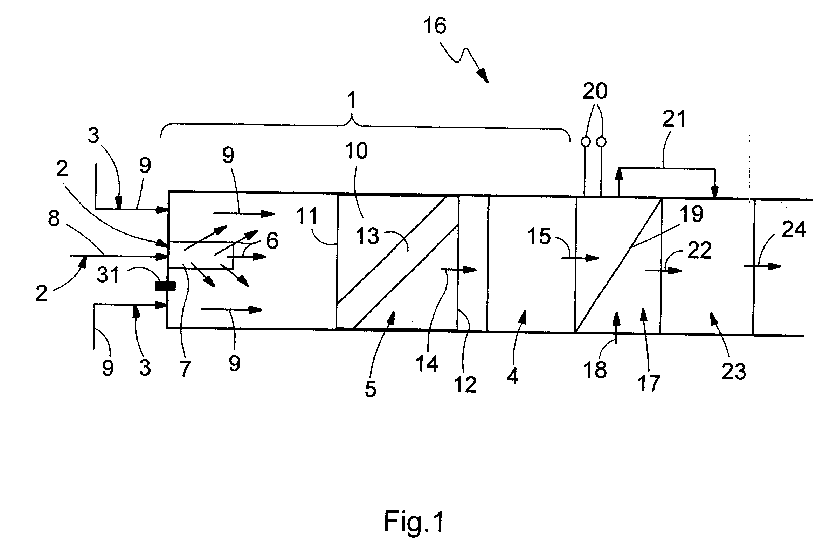

Entsprechend Fig. 1 umfasst ein erfindungsgemäßer Reformer 1 eine Brennstoffzuführeinrichtung 2, eine Oxidatorzuführeinrichtung 3, einen Reaktor 4 und eine Mischeinrichtung 5. Die Brennstoffzuführeinrichtung 2 dient zum Zuführen eines gasförmigen Brennstoffs. Das Brennstoffgas bzw. eine Brennstoffgasströmung ist in Fig. 1 durch Pfeile 6 symbolisiert. Vorzugsweise arbeitet die Brennstoffzuführeinrichtung 2 mit einer Verdampfungseinrichtung 7, die aus zugeführtem flüssigen Kraftstoff, repräsentiert durch einen Pfeil 8, den gewünschten gasförmigen Brennstoff 6 erzeugt. Beispielsweise arbeitet die Verdampfungseinrichtung 7 mit Wärmezufuhr und/oder mit einer extrem großen Verdampferfläche. Bei der bevorzugten Anwendung des Reformers 1 in einem Kraftfahrzeug wird als flüssiger Kraftstoff 8 zweckmäßig der ohnehin vorhandene Kraftstoff zum Betreiben einer Brennkraftmaschine des Fahrzeugs verwendet. Beispielsweise handelt es sich beim Flüssigkraftstoff 8 somit um Benzin oder Diesel.

Die Oxidatorzuführeinrichtung 3 dient zum Zuführen eines gasförmigen Oxidators, in der Regel ein sauerstoffhaltiges Gas, vorzugsweise Luft. Das zugeführte Oxidatorgas bzw. die Oxidatorgasströmung ist in Fig. 1 durch Pfeile 9 symbolisiert.

Die Mischeinrichtung 5 ist stromab der Zuführeinrichtungen 2, 3 und stromauf des Reaktors 4 angeordnet. Die Mischeinrichtung 5 besteht im wesentlichen aus einem Körper 10, der von Gasen durchströmbar ist. Der Körper 10 weist eine Einströmseite 11, eine Ausströmseite 12 und wenigstens eine Wandung 13 auf, die zwischen der Einströmseite 11 und der Ausströmseite 12 im Strömungsweg der den Körper 10 durchströmenden Gase angeordnet ist. Die Einströmseite 11 wird im Betrieb des Reformers 1 mit dem Brennstoffgas 6 und dem Oxidatorgas 9 beaufschlagt. Die Wandung 13 ist porös und zwar so, dass sie für Gase durchlässig ist. Die poröse Wandung 13 charakterisiert sich außerdem dadurch, dass sie für Partikel ab einer bestimmten Partikelgröße, insbesondere von etwa 10 - 200 nm, vorzugsweise von etwa 80 - 100 nm, undurchlässig ist. Die Wandung 13 wirkt dabei als Partikelfilter. Die Wandung 13 besitzt z.B. eine Porosität von 40 - 60%. Die Porosität ist dabei das Verhältnis von Hohlraumvolumen zu Gesamtvolumen der Wandung 13. Die Wandung 13 weist z.B. eine Porengröße von 10 - 20 µm auf. Das stromauf des Körpers 10 inhomogene Gemisch aus Brennstoffgas 6 und Oxidatorgas 9 wird bei der Durchströmung der Wandung 13 homogenisiert, so dass im Betrieb des Reformers 1 aus der Ausströmseite 12 ein aus dem Brennstoffgas 6 und dem Oxidatorgas 9 gebildetes, im wesentlichen homogenes Gasgemisch ausströmt, das in Fig. 1 durch einen Pfeil 14 symbolisiert ist.

Das homogene Gasgemisch 14 tritt in den Reaktor 4 ein, der zum Erzeugen eines wasserstoffhaltigen Synthesegases ausgestaltet ist, indem er den Brennstoff und den Oxidator partiell oxidiert. Üblicherweise ist der Reaktor 4 ein Katalysator, insbesondere ein Oxidationskatalysator, dessen katalytisch aktive Beschichtung gezielt so ausgewählt ist, dass bei einem stark unterstöchiometrischen Gasgemisch 14 das gewünschte wasserstoffhaltige Synthesegas oder Reformat entsteht. Das Synthesegas ist in Fig. 1 durch einen Pfeil 15 symbolisiert.

Zweckmäßig bildet der Reformer 1 wie hier einen Bestandteil einer Brennstoffzellenanlage 16, die zusätzlich zum Reformer 1 zumindest eine Brennstoffzelle 17 umfasst. Dieser Brennstoffzelle 17 wird das Synthesegas 15 als Anodengas zugeführt. Gleichzeitig wird der Brennstoffzelle 17 ein geeignetes Oxidatorgas als Kathodengas zugeführt. Dieses Oxidatorgas oder Kathodengas ist in Fig. 1 durch einen Pfeil 18 symbolisiert. In der Brennstoffzelle 17 sind Anodengas 15 und Kathodengas 18 durch eine Elektrolytplatte oder Elektrolytmembran 19 voneinander getrennt. Durch die Brennstoffzellenreaktion liefert die Brennstoffzelle 17 Strom, der an entsprechenden Anschlüssen 20 abgegriffen werden kann. Gleichzeitig entstehen Anodenabgase 21 und Kathodenabgase 22, die jeweils durch Pfeile symbolisiert sind.

Optional kann die Brennstoffzellenanlage 16 stromab der Brennstoffzelle 17 eine Brennkammer 23 aufweisen, in der die Abgase 21, 22 der Brennstoffzelle 17 gemischt und darin verbleibende Brennstoffreste verbrannt werden. Dies führt zu einer verbesserten Ausnutzung des Brennstoffs sowie zu einer Reinigung der Abgase 21, 22. Die Verbrennungsabgase der Brennkammer 23 sind in Fig. 1 durch einen Pfeil 24 symbolisiert.

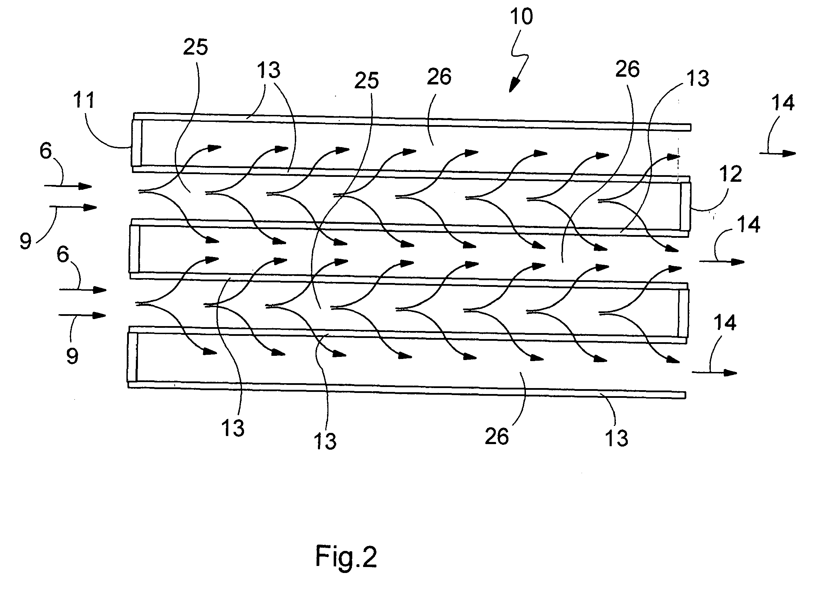

Entsprechend Fig. 2 kann der Körper 10 mehrere Einlasskanäle 25 aufweisen, die jeweils an der Einströmseite 11 offen sind, während sie an der Ausströmseite 12 verschlossen sind. Des Weiteren sind bei diesem Beispiel mehrere Auslasskanäle 26 vorgesehen, die jeweils an der Einströmseite 11 verschlossen sind, während sie gleichzeitig an der Ausströmseite 12 offen sind. Die Kanäle 25, 26 erstrecken sich dabei jeweils von der Einströmseite 11 bis zur Ausströmseite 12. Des Weiteren erstrecken sich sämtliche Kanäle 25, 26 parallel zueinander. Benachbarte Kanäle 25, 26 sind durch die Wandungen 13 voneinander getrennt. Das an der Einströmseite 11 eintretende inhomogene Gemisch aus Brennstoffgas 6 und Oxidatorgas 9 kann nur in die Einlasskanäle 25 eintreten. Da diese ausgangsseitig verschlossen sind, muss das Gasgemisch durch die porösen Wandungen 13 hindurchtreten, um in die Auslasskanäle 26 zu gelangen. Der Durchtritt durch die porösen Wandungen 13 führt zum gewünschten intensiven Durchmischen der Gase. Dementsprechend tritt aus den Austrittskanälen 26 an der Ausströmseite 12 das homogene Gasgemisch 14 aus dem Körper 10 aus.

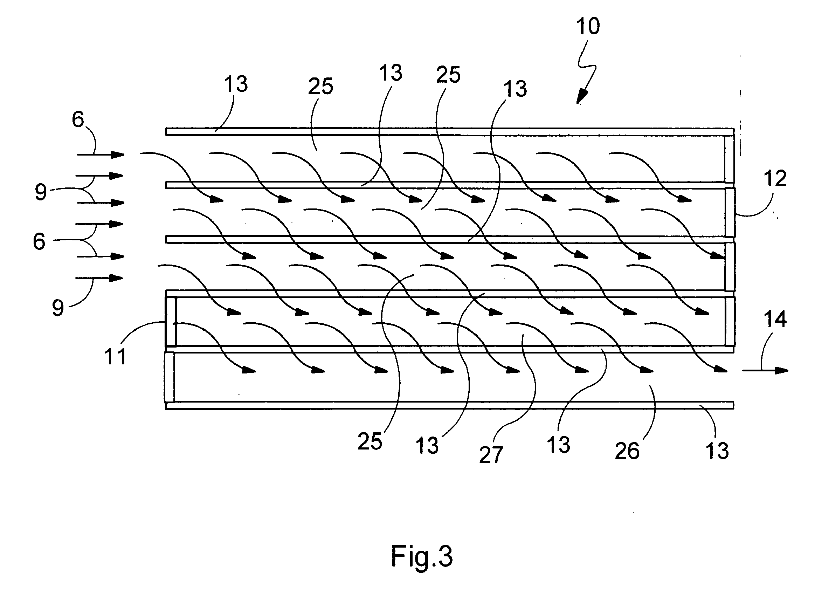

Fig. 3 zeigt exemplarisch eine Ausführungsform, die zusätzlich zu Einlasskanälen 25 und Auslasskanälen 26 Blindkanäle 27 aufweist, von denen in Fig. 3 jedoch nur einer dargestellt ist. Diese Blindkanäle 27 sind sowohl an der Einströmseite 11 als auch an der Ausströmseite 12 verschlossen. Zumindest in dem hier gezeigten Längsschnitt grenzen die Einlasskanäle 25 nicht direkt über die Wandungen 13 an die Auslasskanäle 26, sondern mittelbar über einen Blindkanal 27. Auf diese Weise wird die Gasströmung gezwungen, zwei Wandungen 13 zu durchströmen, um aus dem Körper 10 wieder herauszukommen. Hierdurch kann die Homogenisierung des Gasgemischs 14 verbessert werden.

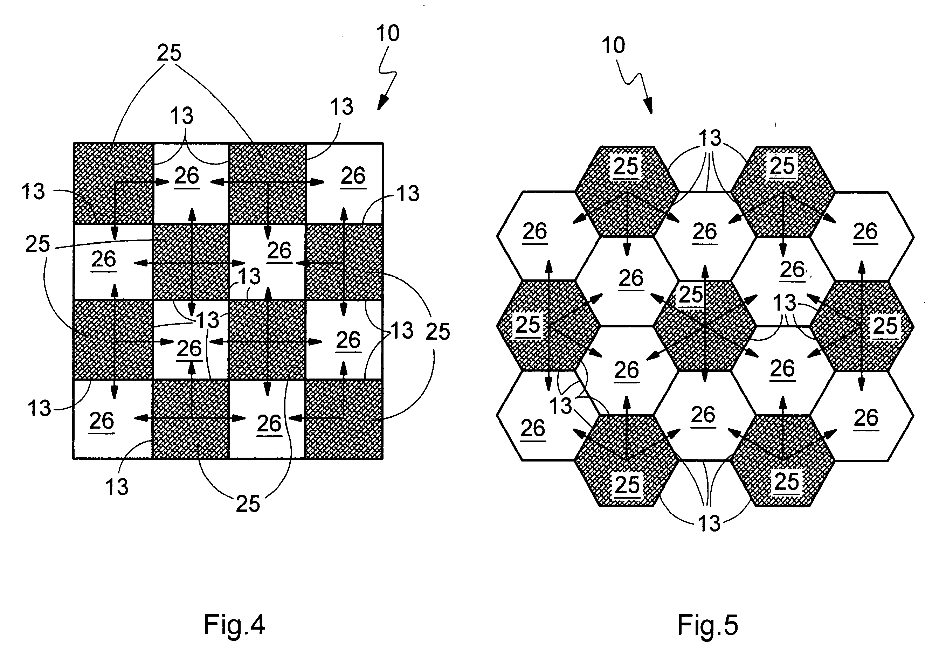

Entsprechend den Fig. 4 und 5 wird für die Verteilung der unterschiedlichen Kanäle 25, 26, 27 entlang des Querschnitts des Körpers 10 eine gleichmäßige Anordnung, vorzugsweise eine Anordnung in einem sich wiederholenden Muster gewählt. Die Fig. 4 und 5 zeigen exemplarisch Ausführungsformen, bei denen der Körper 10 ausschließlich Einlasskanäle 25, deren Querschnitte als Vollflächen dargestellt sind, und Auslasskanäle 26 aufweist, deren Querschnitte durch Umfangslinien dargestellt sind. Die Durchströmung der Wandungen 13 ist dabei durch Pfeile angedeutet. Vorzugsweise bilden die Kanäle 25, 26 und ggf. 27 im Querschnitt des Körpers 10 eine Wabenstruktur. Entsprechend Fig. 4 können dabei die einzelnen Kanäle 25, 26 rechteckige bzw. quadratische Querschnitte aufweisen, wobei hier eine schachbrettartige Ordnung gewählt ist. Jeder Einlasskanal 25 grenzt somit an vier Auslasskanäle 26, abgesehen von Randbereichen.

Im Unterschied dazu zeigt Fig. 5 exemplarisch eine Ausführungsform, bei der die Kanäle 25, 26 sechseckige Querschnitte aufweisen. Die Anordnung der Kanäle 25, 26 erfolgt dabei so, dass jeder Einlasskanal 25 an sechs Auslasskanäle 26 angrenzt, abgesehen von Randbereichen. Ebenso sind andere Querschnitte für die einzelnen Kanäle 25, 26 denkbar, wie z. B. Dreieckquerschnitte oder Achteckquerschnitte.

Bei diesen Ausführungsformen beruht die Durchmischung auch auf dem Effekt, dass die Gasströme mehrerer Einlasskanäle 25 in den Auslasskanälen 26 zusammenströmen und sich durchmischen. Bildlich gesprochen werden bei der Ausführungsform gemäß Fig. 4 je vier Gasströmungen der Einlasskanäle 25, die unterschiedliche Brennstoff-Oxidator-Verhältnisse aufweisen, in einem Auslasskanal 26 vermischt, wodurch insgesamt die resultierenden Brennstoff-Oxidator-Verhältnisse in den Auslasskanälen 26 homogenisiert sind.

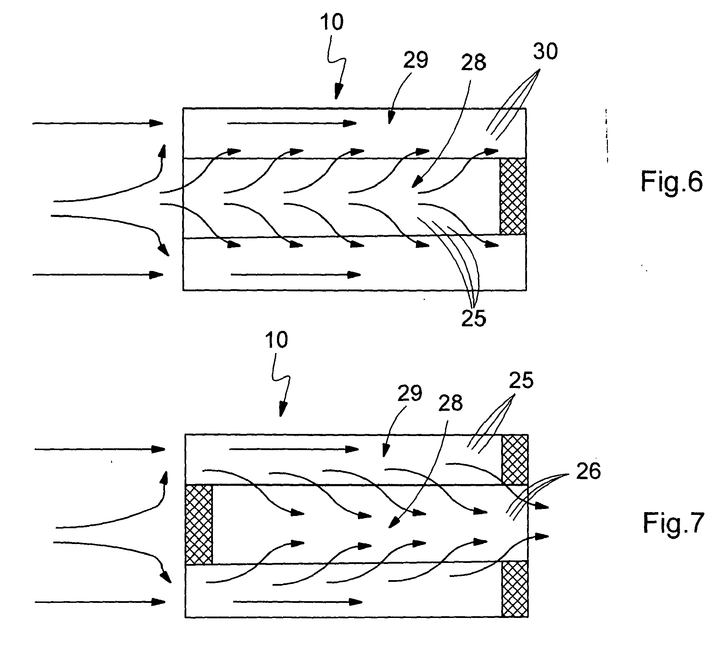

Entsprechend den Fig. 6 und 7 kann der Körper 10 bezüglich seines Querschnitts einen zentralen Kernbereich 28 sowie einen Ringbereich 29 aufweisen, der den Kernbereich 28 umfangsmäßig umschließt. Entsprechend Fig. 6 ist es dabei grundsätzlich möglich, den Kernbereich 28 ausschließlich aus den eingangsseitigen offenen und ausgangsseitigen verschlossenen Einlasskanälen 25 aufzubauen. Im Unterschied dazu kann der Ringbereich 29 wie hier ausschließlich aus Durchlasskanälen 30 bestehen, die jeweils beidseitig, also sowohl an der Einströmseite 11 als auch an der Ausströmseite 12 offen sind. Zusätzlich zu den Durchlasskanälen 30 kann der Ringbereich 29 Auslasskanäle 26 enthalten oder bei einer Variante ausschließlich aus solchen Auslasskanälen 26 bestehen. Bei einer solchen Ausführungsform wird die dem Kernbereich 28 zugeführte Gasströmung gezwungen, die einzelnen Wandungen 13 radial nach außen zu durchdringen, um in den Ringbereich 29 eintreten und aus dem Körper 10 austreten zu können.

Bei der in Fig. 7 gezeigten alternativen Ausführungsform besteht der Kernbereich 28 ausschließlich aus Auslasskanälen 26. Im Unterschied dazu besteht hier der Ringbereich 29 ausschließlich aus Einlasskanälen 25. Optional kann der Ringbereich 29 zusätzlich Durchlasskanäle 30 aufweisen. Ebenso kann der Ringbereich 29 auch ausschließlich aus solchen Durchlasskanälen 30 bestehen.

Die mit Bezug auf die Fig. 6 und 7 erläuterten Ausführungsformen berücksichtigen die Erkenntnis, dass der Kernbereich bei einem zylinderförmigen Reformer 1 im Vergleich zu dem diesen umschließenden Ringbereich häufig vergleichsweise mager ist, also einen niedrigeren Brennstoffanteil in der Gasströmung aufweist. Um dies auszugleichen, wird durch die gezeigte Struktur des Körpers 10 eine Radialströmung erzwungen.

Die porösen Wandungen 13 bestehen vorzugsweise aus einem keramischen Werkstoff, der auf geeignete Weise extrudiert und/oder gesintert ist. Beispielsweise sind die Wandungen 13 bzw. ist der Körper 10 aus Cordierit oder aus Siliziumcarbid hergestellt. Vorzugsweise ist der Körper 10 aus zumindest einem keramischen Monolithen hergestellt. Die Verschlüsse der einzelnen Kanäle 25, 26, 27 können grundsätzlich aus demselben Material wie die Wandungen 13 bestehen oder aus einem geeigneten anderen Material. Derartige Keramikkörper sind grundsätzlich aus Anwendungen in Partikelfiltern und Katalysatoren bekannt, so dass im Hinblick auf Materialauswahl auf diese bekannten Monolithstrukturen zurückgegriffen werden kann.

Mit Hilfe des hier vorgestellten Körpers 10 lässt sich somit allgemein eine inhomogene Gasströmung, die zumindest aus zwei miteinander zu vermischenden Gasströmungen besteht, effektiv homogenisieren, um auf diese Weise ein über den durchströmten Querschnitt homogenes Gasgemisch bereitstellen zu können. Bei der hier gezeigten bevorzugten Anwendung in einem Reformer 1 stromauf des Reaktors 4 kann dadurch die Effektivität des Reaktors 4 und gleichzeitig dessen Standzeit verbessert werden.

Darüber hinaus ergeben sich bei der beschriebenen bevorzugten Anwendung des Körpers 10 im Reformer 1 zusätzliche Vorteile. Beispielsweise kann der Reformer 1 in einem Startbetrieb betrieben werden, mit dem Ziel, den Reaktor 4 möglichst rasch auf dessen Betriebstemperatur zu bringen. Hierzu werden die Brennstoffzuführung 2 und die Oxidatorzuführung 3 zur Bereitstellung eines überstöchiometrischen Gemischs (Oxidatorüberschuss) angesteuert. Dieses Gemisch kann bereits stromauf des Reaktors 4 und vorzugsweise stromauf der Mischeinrichtung 5 gezündet werden. Hierzu enthält der Reformer 1 stromauf der Mischeinrichtung 5 beispielsweise einen Glühstift 31. Diese Verbrennungsreaktion erzeugt heiße Abgase zum schnellen Aufheizen des Reaktors 4. Bei dieser überstöchiometrischen Verbrennungsreaktion können Partikel, insbesondere Rußpartikel, entstehen, die für die Funktion des Reaktors 4 nachteilig sind. Der erfindungsgemäß stromauf des Reaktors 4 angeordnete Körper 10 arbeitet in diesem Startbetrieb des Reformers 1 als Partikelfilter, da die partikelhaltigen Verbrennungsabgase erst die porösen Wandungen 13 des Körpers 10 durchströmen müssen, um zum Reaktor 4 zu gelangen. Dabei werden die mitgeführten Partikel in den Wandungen 13 abgelagert, wodurch das Abgas gereinigt wird.

Auch während des normalen Reformerbetriebs kann es zu einer Partikelbildung bzw. Rußbildung bereits stromauf der Mischeinrichtung 5 kommen. Insbesondere bei Dieselkraftstoff als flüssigem Ausgangskraftstoff 8 arbeitet der Reformer 1 stromauf der Mischeinrichtung 5 mit einer Vorreaktion im Niedertemperaturbereich, die auf dem Prinzip der "kalten Flamme" beruht. Diese Vorreaktionen dienen im wesentlichen dazu, die langen Molekülketten des Dieselkraftstoffs zu zerkleinern, um die partielle Oxidation im Reaktor 4 zu vereinfachen. Bei diesen Vorreaktionen können Partikel, insbesondere Rußpartikel entstehen, die mit Hilfe des Körpers 10 aus dem Gasgemisch herausgefiltert werden können, bevor dieses in den Reaktor 4 gelangt.

Beim Abschalten des Reformers 1 kann eine Abfahrprozedur oder Abschaltprozedur durchgeführt werden, die beispielsweise auf die einzuhaltenden Randbedingungen der Brennstoffzelle 17 Rücksicht nimmt. Beispielsweise darf die Anodenseite der Brennstoffzelle 17 im heißen Zustand nicht mit Sauerstoff in Kontakt kommen.

Für die Regeneration des zusätzlich als Partikelfilter dienenden Körpers 10 kann nun ein späterer Kaltstartbetrieb des Reformers 1 genutzt werden. Durch die bei einem überstöchiometrischen Gemisch initiierte Verbrennungsreaktion stromauf des Körpers 10 kann bei entsprechenden Temperaturen durch den vorhandenen Oxidatorüberschuss eine Regeneration des Körpers 10 durch Abbrand der Rußpartikel initiiert werden. Bei diesem Startvorgang ist die Anodenseite der Brennstoffzelle 17 kalt und übersteht die Beaufschlagung mit Sauerstoff.

## Patentansprüche

1. Reformer zum Erzeugen eines wasserstoffhaltigen Synthesegases (15) aus einem Brennstoff (6) und aus einem Oxidator (9), insbesondere für eine Brennstoffzellenanlage (16),
- mit einer Brennstoffzuführeinrichtung (2) zum Zuführen eines gasförmigen Brennstoffs (6),
- mit einer Oxidatorzuführeinrichtung (3) zum Zuführen eines gasförmigen Oxidators (9),
- mit einem Reaktor (4) zum Erzeugen des Synthesegases (15) aus dem Brennstoff (6) und aus dem Oxidator (9),
- wobei stromauf des Reaktors (4) eine Mischeinrichtung (5) angeordnet ist, die einen von Gasen durchströmbaren Körper (10) aufweist,
- wobei der Körper (10) zwischen einer im Betrieb des Reformers (1) mit dem Brennstoffgas (6) und mit dem Oxidatorgas (9) beaufschlagten Einströmseite (11) und einer Ausströmseite (12), aus der im Betrieb des Reformers (1) ein aus Brennstoffgas (6) und Oxidatorgas (9) gebildetes Gasgemisch (14) ausströmt, wenigstens eine im Strömungsweg angeordnete, für Gase durchlässige, poröse Wandung (13) aufweist.

2. Reformer nach Anspruch 1,
**dadurch gekennzeichnet,**
- **dass** der Körper (10) mehrere Einlasskanäle (25) aufweist,
- **dass** die Einlasskanäle (25) an der Einströmseite (11) offen und an der Ausströmseite (12) verschlossen sind,
- **dass** die Einlasskanäle (25) durch die gasdurchlässigen, porösen Wandungen (13) voneinander getrennt sind.

3. Reformer nach Anspruch 1 oder 2,
**dadurch gekennzeichnet,**
- **dass** der Körper (10) mehrere Auslasskanäle (26) aufweist,
- **dass** die Auslasskanäle (26) an der Einströmseite (11) verschlossen und an der Ausströmseite (12) offen sind,
- **dass** die Auslasskanäle (26) durch die gasdurchlässigen, porösen Wandungen (13) voneinander getrennt sind.

4. Reformer nach Anspruch 2 und 3,
**dadurch gekennzeichnet,**
**dass** der Körper (10) sowohl mehrere Einlasskanäle (25) als auch mehrere Auslasskanäle (26) aufweist, die durch die gasdurchlässigen, porösen Wandungen (13) voneinander getrennt sind.

5. Reformer nach einem der Ansprüche 2 bis 4,
**dadurch gekennzeichnet,**
- **dass** der Körper (10) mehrere Blindkanäle (27) aufweist, die an der Einströmseite (11) und an der Ausströmseite (12) verschlossen sind,
- **dass** die Blindkanäle (27) durch die gasdurchlässigen, porösen Wandungen (13) einerseits von den Einlasskanälen und andererseits von den Auslasskanälen (26) getrennt sind.

6. Reformer nach einem der Ansprüche 2 bis 5,
**dadurch gekennzeichnet,**
**dass** die verschiedenen Kanäle (25, 26, 27) über dem Querschnitt des Körpers (10) gleichmäßig und/oder nach einem sich wiederholenden Muster verteilt angeordnet sind.

7. Reformer nach einem der Ansprüche 2 bis 6,
**dadurch gekennzeichnet,**
**dass** der Körper (10) im Querschnitt einen zentralen Kernbereich (28) und einen den Kernbereich (28) umfangsmäßig umschließenden Ringbereich (29) aufweist, und
**gekennzeichnet durch** eines der folgenden Merkmale:
- der Kernbereich (28) enthält ausschließlich Einlasskanäle (25) und der Ringbereich (29) enthält ausschließlich Auslasskanäle (26) und/oder beidseitig offene Durchlasskanäle (30);
- der Kernbereich (28) enthält ausschließlich Auslasskanäle (26) und der Ringbereich (29) enthält ausschließlich Einlasskanäle (25) und/oder beidseitig offene Durchlasskanäle (30).

8. Reformer nach einem der Ansprüche 2 bis 7,
**dadurch gekennzeichnet,**
- **dass** die Kanäle (25, 26, 27, 30) im Querschnitt des Körpers (10) eine Wabenstruktur bilden, und/oder
- **dass** die Kanäle (25, 26, 27, 30) rechteckige oder sechseckige oder achteckige Querschnitte aufweisen, und/oder
- **dass** die jeweilige Wandung (13) aus einem keramischen Werkstoff besteht, und/oder
- **dass** der Körper (10) aus wenigstens einem keramischen Monolithen hergestellt ist.

9. Reformer nach einem der Ansprüche 1 bis 8,
**dadurch gekennzeichnet,**
**dass** stromab des Reaktors (4) eine Brennstoffzelle (17) und/oder eine Brennkammer (23) angeordnet ist/sind.

10. Verwendung eines von Gasen durchströmbaren Körpers (10), der zwischen einer Einströmseite (11) und einer Ausströmseite (12) wenigstens eine im Strömungsweg angeordnete, für Gase durchlässige, poröse Wandung (13) aufweist, zum Durchmischen von wenigstens zwei Gasströmungen (6, 9), indem die wenigstens zwei Gasströmungen (6, 9) an der Einströmseite (11) in den Körper (10) eingeleitet werden und das Gasgemisch (14) an der Ausströmseite (12) aus dem Körper (10) ausgeleitet wird.

11. Verwendung nach Anspruch 10,
**gekennzeichnet durch** die kennzeichnenden Merkmale wenigstens eines der Ansprüche 2 bis 8.
